(19) Europäisches Patentamt
European Patent Office
Office européen des brevets

(11) **EP 3 461 656 B1**

(12) # EUROPEAN PATENT SPECIFICATION

(45) Date of publication and mention of the grant of the patent:
**03.05.2023 Bulletin 2023/18**

(21) Application number: **18194866.2**

(22) Date of filing: **17.09.2018**

(51) International Patent Classification (IPC):
***B60C 1/00*** *(2006.01)* ***C08K 3/36*** *(2006.01)*
***C08L 7/00*** *(2006.01)*

(52) Cooperative Patent Classification (CPC):
(C-Sets available)
**B60C 1/0016; C08L 7/00;** Y02T 10/86 (Cont.)

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2017 JP 2017191736**

(43) Date of publication of application:
**03.04.2019 Bulletin 2019/14**

(73) Proprietor: **Sumitomo Rubber Industries, Ltd.**
**Kobe-shi, Hyogo 651-0072 (JP)**

(72) Inventor: **HATANO, Seiji**
**Kobe-shi,, Hyogo 651-0072 (JP)**

(74) Representative: **TBK**
**Bavariaring 4-6**
**80336 München (DE)**

(56) References cited:
**EP-A1- 2 783 880** **JP-A- 2016 003 269**
**JP-A- 2016 035 053**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/06, C08L 47/00, C08K 3/36, C08K 5/0016**

## Description

TECHNICAL FIELD

The present disclosure relates to a tire, in particular a tire assuring that ride comfort performance can be maintained for a long period of time.

BACKGROUND OF THE INVENTION

Enhancement of fuel efficiency by improvement of rolling resistance and improvement of abrasion resistance and wet grip performance are demand for a tire, where these performances conflict with each other. As a method of improving fuel efficiency and wet grip performance in good balance, there is a method of using silica as a filler. However, this method has a room for improvement in that silica has strong self-cohesiveness property and therefore dispersion thereof is difficult, and from this point of view, there is a room for improvement.

In JP 2014-506277 A, it is described that wet grip performance is improved by compounding highly dispersible silica in a relatively large amount together with a liquid plasticizer such as olein sunflower vegetable oil.

JP 2016- 003269 A relates to a summer tire having a tread made using a rubber composition wherein, based on the rubber component 100 mass%, the content of farnesene resin with a weight average molecular weight of 1000-500000 is 1-50 pts. mass, and the content of silica with a nitrogen adsorption specific surface area of 40-400 $m^2$/g is 10-150 pts.

EP2783880 A1 relates to a studless winter tire including a tread formed from a rubber composition containing a predetermined amount of a farnesene resin obtained by polymerizing farnesene or containing a predetermined amount of at least one myrcene resin selected from the group consisting of myrcene polymers with a Mw of 1,000-500,000, myrcene-butadiene copolymers with a Mw of 1,000-500,000, and myrcene-styrene copolymers with a Mw of 1,000-150,000.

JP 2016-035053 A relates to a rubber composition for a tire which is obtained by blending 50 pts.wt. or more in total of a softener containing 5 to 100 pts.wt. of an aromatic vinyl-farnesene copolymer, 120 pts.wt. or more of silica and a silane coupling agent comprising a polysiloxane having a specific average composition formula in an amount of 2 to 20 wt.% of the silica, based on 100 pts.wt. of a diene-based rubber comprising an aromatic vinyl-conjugated diene-based rubber having a glass transition temperature of -35°C or more.

SUMMARY OF THE INVENTION

However, in the invention described in JP 2014-506277 A, there was a problem such that as time lapses, a liquid plasticizer being an oil comes out and a rubber becomes hard. As a result, there was a problem such that it is also difficult to maintain ride comfort performance for a long period of time.

An object of the present disclosure is to provide a tire assuring that variation with time of hardness is inhibited and ride comfort performance can be maintained for a long period of time.

The present inventor has made intensive studies and as a result, have found that the above-mentioned problem can be solved by providing a tire with a tread composed of a rubber composition comprising a predetermined amount of a liquid farnesene resin and a predetermined amount of silica with respect to a rubber component and wherein a total amount of the liquid farnesene resin and a plasticizer, is a predetermined amount and have completed the present disclosure.

Namely, the present disclosure relates to:

[1] a tire having a tread composed of a rubber composition comprising 2 to 20 parts by mass of a liquid farnesene resin and 10 to 150 parts by mass of silica based on 100 parts by mass of a rubber component, wherein a total content of the liquid farnesene resin and a plasticizer is 2 to 100 parts by mass, preferably 3 to 80 parts by mass, more preferably 4 to 50 parts by mass, wherein the rubber component comprises 5 to 50% by mass of natural rubber and 10 to 95% by mass of styrene-butadiene rubber and wherein the rubber composition further comprises an aromatic petroleum resin as the plasticizer

[2] the tire of the above [1], wherein the content of the liquid farnesene resin is preferably 3 to 15 parts by mass, more preferably 4 to 10 parts by mass,

[3] the tire of the above [1] or [2], wherein the liquid farnesene resin is at least one selected from the group consisting of a liquid farnesene-butadiene copolymer, a liquid farnesene homopolymer and a liquid farnesene-styrene copolymer,

[4] the tire of any of the above [1] to [3], wherein the rubber component comprises 10 to 40% by mass, preferably 15 to 30% by mass of natural rubber and 20 to 90% by mass, preferably 30 to 85% by mass of styrene-butadiene

rubber,
[5] the tire of the above [4], wherein an amount of styrene in the styrene-butadiene rubber is 5 to 60% by mass, preferably 10 to 50% by mass, more preferably 20 to 40% by mass,
[6] the tire of any of the above [1] to [5], wherein the content of silica is 30 to 100 parts by mass, preferably 45 to 70 parts by mass,
[7] the tire of any of the above [1] to [6], wherein the aromatic petroleum resin is an $\alpha$-methyl styrene resin.

According to the present disclosure, the tire allows variation with time of a hardness of the tire to be inhibited and enables ride comfort performance to be maintained for a long period of time.

DETAILED DESCRIPTION

The tire of the present disclosure is characterized by comprising a tread composed of a rubber composition comprising a predetermined amount of a liquid farnesene resin and a predetermined amount of silica to a rubber component, wherein a total content of the liquid farnesene resin and a plasticizer is a predetermined amount.
In the tire of the present disclosure, it is considered that in the rubber composition comprising a predetermined amount of silica, by compounding a predetermined amount of a liquid farnesene resin, a rubber component is coupled with the liquid farnesene resin by crosslinking and hardening of a rubber with a lapse of time can be inhibited and that by providing a tire with a tread composed of such a rubber composition, flexibility of the tire can be maintained for a long period of time, thereby enabling quietness and good ride comfort to be kept for a longer period of time and exhibiting an effect of maintaining ride comfort performance of the present disclosure more satisfactorily.
Herein, "a liquid farnesene resin" means one having a weight-average molecular weight (Mw) of 1,000 to 500,000 among polymers obtained by polymerization of farnesene as a monomer component.

Rubber component

A rubber component which is used in a rubber composition according to the present disclosure is limited according to claim 1, and examples thereof include isoprene-based rubbers such as natural rubber (NR), high purity NR (UPNR), deproteinized NR (DPNR), epoxidized NR (ENR) and isoprene rubber (IR), styrene-butadiene rubber (SBR), butadiene rubber (BR), styrene-isoprene-butadiene rubber (SIBR), chloroprene rubber (CR), acrylonitrile-butadiene rubber (NBR), butyl rubber (IIR). Among these, NR, SBR and BR are preferable, and in particular, from the viewpoint of grip performance and abrasion resistance, it is suitable that the rubber component comprises SBR, and a combination use of NR, SBR and BR is particularly suitable.

(Natural rubber)

Natural rubber is not limited particularly, and for example, SIR20, RSS#3, TSR20, ENR which are usually used in a tire industry can be used. These natural rubbers can be used alone or can be used in combination of two or more thereof.
The rubber composition of the present disclosure comprises NR, and the content of NR in 100% by mass of the rubber component is not less than 5% by mass, preferably not less than 10% by mass, further preferably not less than 15% by mass. When the content of NR is not less than 5% by mass, kneading processability and crack resistance tend to be enhanced. On the other hand, the content of NR in 100% by mass of the rubber component is not more than 50% by mass, preferably not more than 40% by mass, further preferably not more than 30% by mass. When the content of NR is not more than 50% by mass, lowering of grip performance tends to be inhibited. It is noted that in the case where two kinds or more of NRs are used in combination, the total content of NRs is a content of NRs in the rubber component in the present disclosure.

(Styrene-butadiene rubber (SBR))

SBR is not limited particularly, and examples thereof include emulsion-polymerized SBR (E-SBR), solution-polymerized SBR (S-SBR). SBR may be oil-extended or may not be oil-extended. Among these, oil-extended and high molecular weight SBR is preferable from the viewpoint of grip performance. These SBRs may be used alone or may be used in combination of two or more thereof.
Further, SBR may be one having a trunk chain and/or a terminal modified with a modifying agent, and may be one having been subjected to modification with a polyfunctional modifying agent, for example, tin tetrachloride, silicon tetrachloride to have a branched structure partially. In particular, it is preferable that SBR is one having a trunk chain and/or a terminal modified with a modifying agent having a functional group interacting with silica. By use of such a

modified styrene-butadiene rubber modified with a modifying agent and having a functional group interacting with silica, fuel efficiency and wet grip performance can be improved further in good balance.

Examples of the functional group interacting with silica include amino group, amide group, alkoxy silyl group, isocyanate group, imino group, imidazole group, urea group, ether group, carbonyl group, oxycarbonyl group, sulfide group, disulfide group, sulfonyl group, sulfinyl group, thiocarbonyl group, ammonium group, imide group, hydrazo group, azo group, diazo group, carboxyl group, nitrile group, pyridyl group, alkoxy group, hydrocarbon group, hydroxyl group, oxy group, epoxy group. It is noted that these functional groups may have a substituent. Among these, for the reason that an effect of enhancing fuel efficiency and wet grip performance is high, primary, secondary and tertiary amino groups (particularly glycidyl amino group), epoxy group, hydroxyl group, alkoxyl group (preferably alkoxyl group having 1 to 6 carbon atoms), alkoxy silyl group (preferably alkoxy silyl group having 1 to 6 carbon atoms) and hydrocarbon radical are preferable.

A styrene content of SBR is preferably not less than 5% by mass, more preferably not less than 10% by mass, further preferably not less than 20% by mass. When the styrene content is not less than 5% by mass, grip performance tends to be enhanced. On the other hand, the styrene content of SBR is preferably not more than 60% by mass, more preferably not more than 50% by mass, further preferably not more than 40% by mass. When the styrene content is not more than 60% by mass, lowering of fuel efficiency tends to be inhibited. It is noted that herein the styrene content of SBR is calculated by $H^1$-NMR measurement.

An amount of vinyl bond of SBR is preferably not less than 5% by mole, more preferably not less than 20% by mole, further preferably not less than 40% by mole. When the amount of vinyl bond of SBR is not less than 5% by mole, grip performance tends to be enhanced. On the other hand, the amount of vinyl bond of SBR is preferably not more than 80% by mole, more preferably not more than 70% by mole, further preferably not more than 65% by mole. When the amount of vinyl bond of SBR is not more than 80% by mole, lowering of fuel efficiency tends to be inhibited. It is noted that herein the amounts of vinyl bonds of SBR and BR are calculated by an infrared spectroscopic analysis.

A weight-average molecular weight (Mw) of SBR is preferably not less than 100,000, more preferably not less than 200,000, further preferably not less than 250,000. When the weight-average molecular weight (Mw) of SBR is not less than 100,000, abrasion resistance tends to be enhanced. On the other hand, the weight-average molecular weight (Mw) of SBR is preferably not more than 2000,000, more preferably not more than 1500,000, further preferably not more than 1000,000. When the weight-average molecular weight (Mw) of SBR is not more than 2000,000, lowering of kneading processability tends to be inhibited.

The rubber composition of the present disclosure comprises SBR, and the content of SBR in 100% by mass of the rubber component is not less than 10% by mass, preferably not less than 20% by mass, further preferably not less than 30% by mass. When the content of SBR is not less than 10% by mass, grip performance tends to be enhanced. On the other hand, the content of SBR in 100% by mass of the rubber component is not more than 95% by mass, preferably not more than 90% by mass, further preferably not more than 85% by mass. When the content of SBR is not more than 95% by mass, lowering of fuel efficiency tends to be inhibited. It is noted that in the case where two kinds or more of SBRs are used in combination, the total content of SBRs is a content of SBRs in the rubber component in the present disclosure.

(Butadiene rubber (BR))

BR is not limited particularly, and for example, BR having a cis-1,4 bond content of less than 50% (low cis BR), BR having a cis-1,4 bond content of not less than 90% (high cis BR), rare-earth butadiene rubber synthesized using a catalyst of rare-earth element (rare-earth BR), BR comprising a syndiotactic polybutadiene crystal (SPB-containing BR), modified BRs (high cis modified BR, low cis modified BR) which are usually used in a tire industry can be used. These BRs may be used alone or may be used in combination of two or more thereof. Particularly use of low cis modified BR is more preferable from the viewpoint of kneading processability. It is noted that the cis-1,4 bond content in BR is a value calculated by an infrared spectroscopic analysis.

A weight-average molecular weight (Mw) of BR is preferably not less than 300,000, more preferably not less than 400,000, further preferably not less than 500,000. When the weight-average molecular weight (Mw) of BR is not less than 300,000, abrasion resistance tends to be enhanced. On the other hand, the weight-average molecular weight (Mw) of BR is preferably not more than 1000,000, more preferably not more than 800,000, further preferably not more than 700,000. When the weight-average molecular weight (Mw) of BR is not more than 1000,000, lowering of kneading processability tends to be inhibited.

BR may be butadiene rubber modified with a compound having a functional group interacting with silica or may be butadiene rubber having a modified trunk chain or may be one having been subjected to modification with a polyfunctional modifying agent, for example, tin tetrachloride, silicon tetrachloride to have a branched structure partially. Thus, BR is not limited particularly. Example of butadiene rubber modified with a compound having a functional group interacting with silica include those obtained by replacing a skeleton component, that is styrene butadiene rubber of the

above-mentioned modified SBR with butadiene rubber. Particularly preferred as the modified BR is butadiene rubber modified with a low molecular weight compound having a glycidyl amino group in its molecule, and for example, preferred is a modified butadiene rubber modified with a low molecular weight compound represented by the following formula (1).

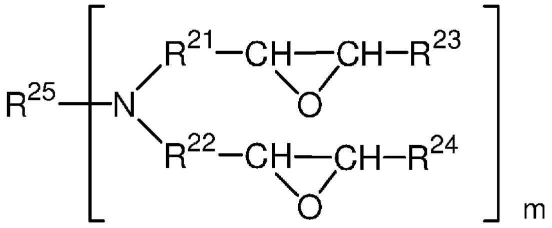

(1)

(In the formula, $R^{21}$ and $R^{22}$ are the same or different and each represents a hydrocarbon group having 1 to 10 carbon atoms, and the hydrocarbon group may have at least one group selected from the group consisting of ether and tertiary amine. $R^{23}$ and $R^{24}$ are the same or different and each represents a hydrogen atom or a hydrocarbon group having 1 to 20 carbon atoms, and the hydrocarbon group may have at least one group selected from the group consisting of ether and tertiary amine. $R^{25}$ represents a hydrocarbon group having 1 to 20 carbon atoms, and the hydrocarbon group may have at least one group selected from the group consisting of ether, tertiary amine, epoxy, carbonyl and halogen. "m" represents an integer of 1 to 6.)

Preferred as $R^{21}$ and $R^{22}$ are alkylene groups having 1 to 10 carbon atoms (preferably 1 to 3 carbon atoms). Preferred as $R^{23}$ and $R^{24}$ are hydrogen atoms. Examples of $R^{25}$ include hydrocarbon groups having 3 to 20 carbon atoms (preferably 6 to 10 carbon atoms, more preferably 8 carbon atoms), and cycloalkyl groups and cycloalkylene groups represented by the following formulae are preferable, and cycloalkylene groups are more preferable.

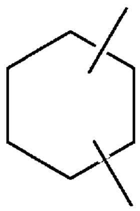 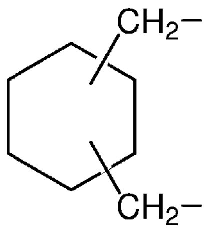 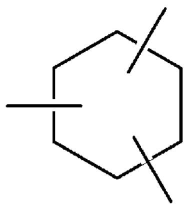 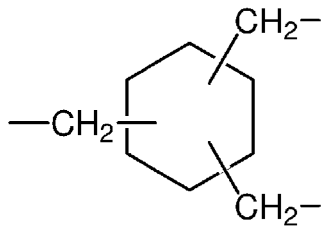

Preferred as "m" is 2 or 3. As examples of the compound represented by the above-mentioned formula tetraglycidyl-meta-xylenediamine, tetraglycidylaminodiphenylmethane, tetraglycidyl-p-phenylenediamine, diglycidylaminomethylcyclohexane, tetraglycidyl-1,3-bisaminomethylcyclohexane are suitably used.

More preferred as a modified BR is a modified butadiene rubber modified with a mixture of a low molecular weight compound having a glycidyl amino group in its molecule and an oligomer of a dimer or more of this low molecular weight compound. Examples of such a modified BR include those described in JP 2009-275178 A.

Preferred as the above-mentioned oligomer are dimer to decamer of the above-mentioned low molecular weight compound. The above-mentioned low molecular weight compound is an organic compound having a molecular weight of not more than 1000, and example of a suitable compound thereof include a compound of the following formula (2).

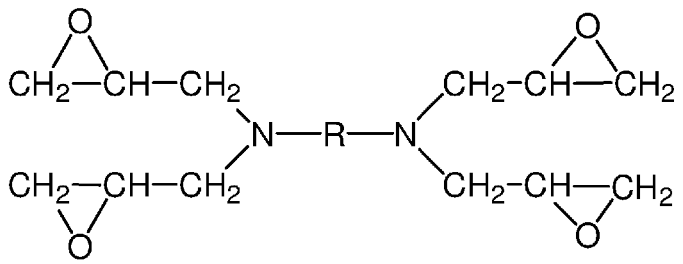

(2)

In the above formula (2), R is a divalent hydrocarbon group or a divalent organic group having at least one polar group selected from the group consisting of polar groups comprising oxygen such as ether, epoxy and ketone, polar groups comprising sulfur such as thioether and thioketone, and polar groups comprising nitrogen such as tertiary amino group and imino group. The divalent hydrocarbon group may be saturated or unsaturated linear, branched or

cyclic one and examples thereof include alkylene, alkenylene, and phenylene. Examples thereof include methylene, ethylene, butylene, cyclohexylene, 1,3-bis(methylene)-cyclohexane, 1,3-bis(ethylene)-cyclohexane, o-phenylene, m-phenylene, p-phenylene, m-xylene, p-xylene, bis(phenylene)-methane.

Examples of the low molecular weight compound represented by the above-mentioned formula (2) include tetraglycidyl-1,3-bisaminomethylcyclohexane,

N,N,N',N'-tetraglycidyl-m-xylenediamine,
4,4-methylene-bis(N,N-diglycidylaniline),
1,4-bis(N,N-diglycidylamino)cyclohexane,
N,N,N',N'-tetraglycidyl-p-phenylenediamine,
4,4'-bis(diglycidylamino)benzophenone,
4-(4-glycidylpiperazinyl)- (N,N-diglycidyl)aniline,
2-[2-(N,N-diglycidylamino)ethyl]-1-glycidylpyrolidine. Among these, tetraglycidyl-1,3-bisaminomethylcyclohexane is preferable.

Suitable examples of the above-mentioned oligomer component include dimers represented by the following formula (3) and trimers represented by the following formula (4).

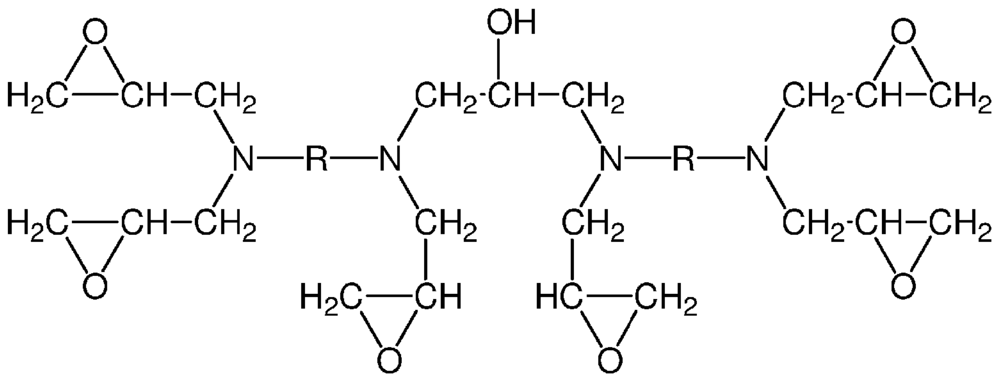
(3)

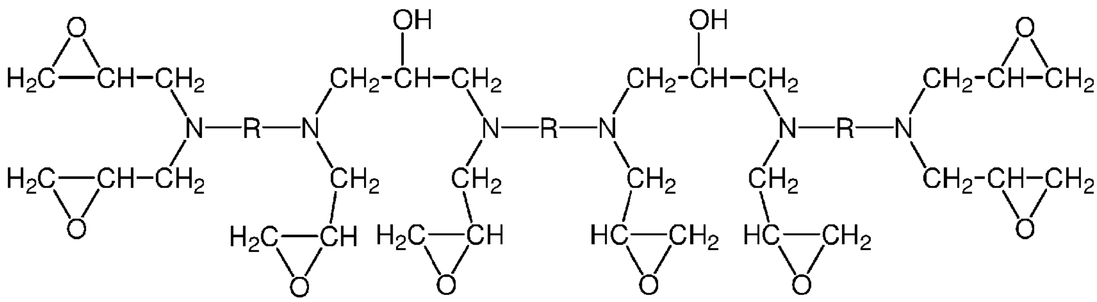
(4)

In the case of modifying with a mixture of the above-mentioned low molecular weight compound and the above-mentioned oligomer, it is preferable that a content of the above-mentioned low molecular weight compound is 75 to 95% by mass and a content of the above-mentioned oligomer is 25 to 5% by mass based on 100% by mass of the modifying agent (mixture).

A ratio of the low molecular weight compound to the oligomer component in the modifying agent can be determined by GPC. Specifically measurement is made by selecting columns being capable of measuring the both of the low molecular weight compound and the oligomer component. In the obtained peaks, a perpendicular is brought down from a first inflection point at a high molecular side in the peak derived from a low molecular weight compound, and a ratio of an area of a low molecular side component to an area of a high molecular side component is obtained. This area ratio corresponds to a ratio of the low molecular weight compound to the oligomer component. It is noted that high molecular side peaks of the oligomer component are integrated until a point where a molecular weight of the oligomer component reaches 10 times or less of the molecular weight of the low molecular weight compound obtained from a molecular weight converted based on standard polystyrene, alternatively until a point where the component peak reaches zero in the case where the component peak reaches zero before a point where a molecular weight of the oligomer component reaches 10 times or less of the molecular weight of the low molecular weight compound.

A reaction of a polymer of butadiene having an active terminal and obtained by anionic polymerization using

a polymerization initiator such as a lithium compound with a modifying agent is conducted by allowing the modifying agent to react with the active terminal of the polymer. For modification of butadiene rubber using a low molecular weight compound having a glycidyl amino group in its molecule or a mixture of such a compound and an oligomer thereof, a well-known method of modifying butadiene using a modifying agent can be used. For example, butadiene rubber can be modified by bringing the compound into contact with butadiene rubber. Specifically there is a method of, after preparation of butadiene rubber by anionic polymerization, adding a predetermined amount of the compound in a rubber solution, thereby subjecting the compound to reaction with a terminal (active terminal) of butadiene for polymerization.

An amount of vinyl bond of BR is preferably not more than 30% by mole, more preferably not more than 15% by mole, further preferably not more than 5% by mole. When the amount of vinyl bond of BR is not more than 30% by mole, there is a tendency that lowering of abrasion resistance is inhibited.

In the case where the rubber composition of the present disclosure comprises BR, a content of the BR in 100% by mass of the rubber component is preferably not less than 5% by mass, more preferably not less than 8% by mass, further preferably not less than 10% by mass. When the content of the BR is not less than 5% by mass, abrasion resistance tends to be enhanced. On the other hand, the content of the BR in 100% by mass of the rubber component is preferably not more than 80% by mass, more preferably not more than 70% by mass, further preferably not more than 60% by mass. When the content of the BR is not more than 80% by mass, there is a tendency that lowering of grip performance is inhibited.

Examples of farnesene constituting the farnesene resin include isomers such as α-farnesene((3E,7E)-3,7,11-trimethyl-1,3,6,10-dodecatetraene) and β-farnesene(7,11-dimethyl-3-methylene-1,6,10-dodecatriene), and (E)-β-farnesene having the following structure is preferable.

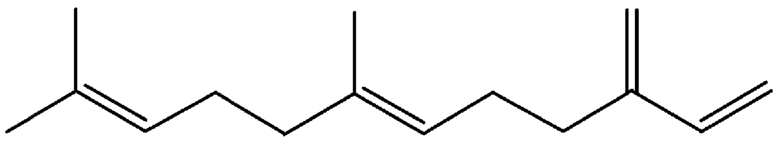

In the present disclosure, by compounding the liquid farnesene resin in a predetermined amount as the softening agent, fuel efficiency, wet grip performance and handling performance becomes excellent in good balance. It is preferable to compound the farnesene resin in place of a softening agent such as oil which has been compounded so far. As a result, an effect of the present disclosure can be obtained more suitably.

The liquid farnesene resin may be a homopolymer of farnesene (farnesene homopolymer) or may be a copolymer of farnesene and a vinyl monomer (farnesene-vinyl monomer copolymer). Examples of the vinyl monomer include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-tert-butyl-2-methylstyrene, vinyl ethyl benzene, divinylbenzene, trivinylbenzene, divinylnaphthalene, tert-butoxystyrene, vinylbenzyl dimethylamine, (4-vinylbenzyl)dimethylaminoethylether, N,N-dimethylaminoethyl styrene, 2-ethylstyrene, 3-ethylstyrene, 4-ethylstyrene, 2-tert-butylstyrene, 3-tert-butylstyrene, 4-tert-butylstyrene, vinylxylene, vinylnaphthalene, vinyltoluene, vinylpyridine, diphenylethylene and diphenylethylene having a tertiary amino group, conjugated diene compounds such as butadiene and isoprene. Among these, styrene and butadiene are preferable. Namely, a copolymer of farnesene and styrene (a farnesene-styrene copolymer) and a copolymer of farnesene and butadiene (a farnesene-butadiene copolymer) are preferable as the farnesene-vinyl monomer copolymer. By compounding a farnesene-styrene copolymer, an effect of improving wet grip performance can be enhanced, and by compounding a farnesene-butadiene copolymer, an effect of improving fuel efficiency and abrasion resistance can be enhanced.

A glass transition temperature (Tg) of the liquid farnesene homopolymer is preferably not higher than -60°C, more preferably not higher than -70°C, and is preferably not lower than -120°C, more preferably not lower than -110°C. When the glass transition temperature is within the above-mentioned range, the liquid farnesene homopolymer can be used as a softening agent and a fuel consumption reducing agent for a tire. For the same reason as mentioned above, a glass transition temperature (Tg) of the farnesene-styrene copolymer is preferably not higher than -15°C, more preferably not higher than -30°C, and is preferably not lower than -80°C, more preferably not lower than -70°C. For the same reason as mentioned above, a glass transition temperature (Tg) of the farnesene-butadiene copolymer is preferably not higher than -60°C, more preferably not higher than -70°C, and is preferably not lower than -120°C, more preferably not lower than -110°C. The Tg is a value measured at a heat-up rate of 10°C/min in accordance with JIS-K7121: 1987 using a differential scanning calorimeter (Q200) available from TA Instruments, Japan.

A weight-average molecular weight (Mw) of the liquid farnesene resin is preferably not less than 1,000, more preferably not less than 2000, further preferably not less than 3,000, particularly preferably not less than 5,000, most preferably not less than 8,000. When the Mw is not less than 1,000, lowering of handling performance and abrasion resistance tend to be inhibited. On the other hand, the Mw is preferably not more than 500,000, more preferably not

more than 300,000, further preferably not more than 150,000, particularly preferably not more than 100,000. When the Mw is not more than 500,000, there is a tendency that increase in a viscosity of a compounded rubber resulting in lowering of processability is inhibited. The farnesene resin having the Mw within the above-mentioned range is in a liquid form at normal temperature and can be suitably used as a softening agent and a fuel consumption reducing agent for a tire.

A melt viscosity of the liquid farnesene homopolymer is preferably not more than 1000 Pa.s, more preferably not more than 200 Pa·s, and is preferably not less than 0.1 Pa.s, more preferably not less than 0.5 Pa·s. When the melt viscosity is within the above-mentioned range, the liquid farnesene homopolymer can be suitably used as a softening agent and a fuel consumption reducing agent for a tire, and is excellent in resistance to blooming. For the same reason as mentioned above, the melt viscosity of the farnesene-vinyl monomer copolymer is preferably not more than 1000 Pa.s, more preferably not more than 650 Pa·s, further preferably not more than 200 Pa·s, and is preferably not less than 1 Pa.s, more preferably not less than 5 Pa·s. The melt viscosity is a value measured at 38°C using a Brookfield type viscometer (manufactured by Brookfield Engineering Labs. Inc.).

In the liquid farnesene homopolymer, a content of farnesene in 100% by mass of a monomer component is preferably not less than 80% by mass, more preferably not less than 90% by mass, and may be 100% by mass.

In the farnesene-vinyl monomer copolymer, a total content of farnesene and a vinyl monomer in 100% by mass of a monomer component is preferably not less than 80% by mass, more preferably not less than 90% by mass, and may be 100% by mass. Further, a copolymerization ratio of farnesene to a vinyl monomer on a mass basis is preferably farnesene : vinyl monomer = 99/1 to 25/75, more preferably 80/20 to 40/60.

Synthesis of the liquid farnesene resin can be made by a known method. For example, in the case of synthesis by anionic polymerization, a liquid farnesene resin can be obtained by charging hexane, farnesene, sec-butyl lithium and a vinyl monomer according to necessity into a pressure-resistant vessel having been subjected to sufficient replacement with nitrogen, then heating up the vessel and stirring the mixture for several hours, and subjecting an obtained polymerization liquid to quenching and vacuum drying.

In the polymerization for preparing the liquid farnesene homopolymer, the polymerization procedure is not limited particularly, and for example, all the monomers may be subjected to polymerization at a time or polymerization may be conducted by adding the monomers in order. Also in the copolymerization for preparing the farnesene-vinyl monomer copolymer, the polymerization procedure is not limited particularly, and for example, all the monomers may be subjected to random copolymerization at a time, or after a specific monomer (for example, only a farnesene monomer or only a butadiene monomer) is copolymerized, remaining monomers may be added thereto for copolymerization, or each of specific monomers may be subjected to copolymerization previously and then block copolymerization.

Farnesene to be used for the liquid farnesene resin may be one prepared from oil resources by chemical synthesis or may be one extracted from an insect such as an ant cow or a plant such as an apple. However, preferred is one prepared by culturing a microorganism using a source of carbon derived from saccharum. A farnesene resin can be prepared efficiently by using the farnesene.

Saccharum may be any one of monosaccharide, disaccharide or polysaccharide, or may be a combination thereof. Examples of monosaccharide include glucose, galactose, mannose, fructose, ribose. Examples of disaccharide include sucrose, lactose, maltose, trehalose, cellobiose. Examples of polysaccharide include starch, glycogen, cellulose, chitin.

A saccharide suitable for preparation of the liquid farnesene can be obtained from various materials, and examples thereof include Saccharum officinarum, bagasse, Miscanthus sinensis, sugar beet, sorghum, grain sorghum, switchgrass, barley, hemp, Hibiscus cannabinus, potato, taro, cassava, sunflower, fruit, theriac, whey, skim milk, maize, straw, grains, flour, wood, paper, wheat straw, cotton. Otherwise, waste cellulose, and other biomass materials may also be used. Among these, plants belonging to a Saccharum group such as Saccharum officinarum are preferable, and Saccharum officinarum is more preferable.

A microorganism is not limited particularly as far as it is one which can be cultured to prepare a liquid farnesene. Examples thereof include eukaryotic, bacteria, archaebacterial. Examples of eukaryotic include yeast, plants.

Further, the microorganism may be a transformant. The transformant can be obtained by introducing a foreign gene into a microorganism becoming a host. The foreign gene is not limited particularly, and preferred is a foreign gene involved in production of farnesene for the reason that a production efficiency of farnesene can be improved more.

Culturing conditions are not limited particularly as far as they are conditions under which a microorganism can produce farnesene. A culture medium to be used for culturing a microorganism may be one which is usually used for culturing of a microorganism. Specific examples of a culture medium in a case of a bacteria include a KB culture medium, an LB culture medium. In a case of yeast, examples of a culture medium therefor include a YM culture medium, a KY culture medium, an F101 culture medium, a YPD culture medium, a YPAD culture medium. In a case of plants, examples of a culture medium therefor include basal mediums such as White culture medium, Heller culture medium, SH culture medium (Schenk-Hildebrandt culture medium), MS culture medium (Murashige-Skoog culture medium), LS culture medium (Linsmaier-Skoog culture medium), Gamborg culture medium, B5 culture medium, MB culture medium and WP culture medium (Woody Plant: for woody plants).

A culturing temperature varies with kind of a microorganism, and is preferably 0 to 50°C, more preferably 10 to 40°C, further preferably 20 to 35°C. A pH value is preferably 3 to 11, more preferably 4 to 10, further preferably 5 to 9. Further, the culturing can be carried out under anaerobic condition and under aerobic condition depending on kind of a microorganism.

The culturing of a microorganism can be conducted batchwise, or can be conducted continuously using a bioreactor. Examples of a specific culturing method include shake culture, rotation culture. Farnesene can be accumulated in cells of a microorganism or can be generated and accumulated in a supernatant of culture.

In a case of obtaining farnesene from a microorganism after the culturing, the farnesene can be obtained by collecting microorganisms by centrifuging, subjecting the microorganisms to disruption and then extracting farnesene from a disrupted microorganism-containing liquid using a solvent such as 1-butanol. Further, a known refining method such as chromatography can also be combined with a solvent extraction method appropriately. Here, it is preferable that disruption of a microorganism is performed at a low temperature, for example, at 4°C in order to prevent denaturation and degradation of farnesene. Microorganisms can be disrupted, for example, by physical disruption using glass beads.

Farnesene can be obtained from a supernatant of culture by removing bacterial cells by centrifugal separation and then extracting the farnesene using a solvent such as 1-butanol.

Farnesene resins obtained from the above-mentioned farnesene derived from microorganisms are available as commercially available ones, and examples of farnesene homopolymer include KB-101, KB-107 manufactured by KURARAY CO., LTD., examples of farnesene-styrene copolymer include FSR-221, FSR-242, FSR-251, FSR-262 manufactured by KURARAY CO., LTD., and examples of farnesene-butadiene copolymer include FBR-746, FB-823, FB-884 manufactured by KURARAY CO., LTD.

A content of the liquid farnesene resin is not less than 2 parts by mass, preferably not less than 3 parts by mass, more preferably not less than 4 parts by mass based on 100 parts by mass of the rubber component. When the content of the liquid farnesene resin is less than 2 parts by mass, there is a tendency that an effect of improving performance obtained by compounding the liquid farnesene resin cannot be obtained sufficiently. On the other hand, the content of the liquid farnesene resin is not more than 20 parts by mass, preferably not more than 15 parts by mass, more preferably not more than 10 parts by mass based on 100 parts by mass of the rubber component. When the content of the liquid farnesene resin exceeds 20 parts by mass, handling performance and abrasion resistance tend to be deteriorated.

Silica

Silica is not limited particularly, and silica generally used in the rubber industry such as silica prepared by a dry method (anhydrous silica) and silica prepared by a wet method (hydrous silica) can be used. In particular, hydrous silica prepared by a wet method is preferred for the reason that many silanol groups are contained. Silica may be used alone or may be used in combination of two or more thereof.

A nitrogen adsorption specific surface area ($N_2SA$) of silica is preferably not less than 40 $m^2/g$, more preferably not less than 60 $m^2/g$, further preferably not less than 100 $m^2/g$. When the $N_2SA$ of silica is not less than 40 $m^2/g$, there is a tendency that a reinforcing effect is enhanced, thereby enhancing abrasion resistance, a rubber strength and a steering stability. On the other hand, the $N_2SA$ of silica is preferably not more than 400 $m^2/g$, more preferably not more than 300 $m^2/g$, further preferably not more than 200 $m^2/g$. When the $N_2SA$ of silica is not more than 400 $m^2/g$, there is a tendency that dispersion of silica is enhanced, thereby inhibiting lowering of fuel efficiency and kneading processability. Herein, the $N_2SA$ of silica is a value measured by a BET method in accordance with ASTM D3037-81.

The content of silica is not less than 10 parts by mass, preferably not less than 30 parts by mass, more preferably not less than 45 parts by mass based on 100 parts by mass of the rubber component. When the content of silica is less than 10 parts by mass, abrasion resistance, a rubber strength, wet grip performance tend to be lowered. On the other hand, the content of silica is not more than 150 parts by mass, preferably not more than 100 parts by mass, more preferably not more than 70 parts by mass based on 100 parts by mass of the rubber component. When the content of silica exceeds 150 parts by mass, processability tends to be lowered.

Other compounding agents

In addition to the above-mentioned components, the rubber composition according to the present disclosure can comprise compounding agents conventionally used in the rubber industry, for example, a reinforcing filler other than silica, a silane coupling agent, potassium salt, wax, a processing aid, a plasticizer (a softening agent such as oil and a resin), various antioxidants, zinc oxide, stearic acid, a Pluronic nonionic surfactant, a vulcanizing agent, a vulcanization accelerator optionally according to necessity.

Other reinforcing filler

A reinforcing filler other than silica such as carbon black, calcium carbonate, alumina, clay and talc which have been used in a rubber composition for a tire can be blended to the rubber composition.

Carbon black

Examples of carbon black include those produced by an oil furnace method, and two or more thereof having different colloidal properties may be used in combination. Examples thereof include GPF, HAF, ISAF and SAF, and ISAF is suitably used. Specifically N110, N121, N134, N220 can be used.

A nitrogen adsorption specific surface area ($N_2SA$) of carbon black is not less than 5 $m^2/g$, preferably not less than 50 $m^2/g$, more preferably not less than 80 $m^2/g$. When the $N_2SA$ of carbon black is not less than 5 $m^2/g$, abrasion resistance, a rubber strength and a steering stability tend to be enhanced. Further, the $N_2SA$ of carbon black is preferably not more than 200 $m^2/g$, more preferably not more than 150 $m^2/g$. When the $N_2SA$ of carbon black is not more than 200 $m^2/g$, there is a tendency that dispersibility thereof is enhanced, thereby enhancing fuel efficiency and processability. Herein, the $N_2SA$ of carbon black is a value measured according to JIS K 6217 Method A.

The content of carbon black is preferably not less than 1 part by mass, more preferably not less than 2 parts by mass, further preferably not less than 5 parts by mass based on 100 parts by mass of the rubber component. Further, the content of carbon black is preferably not more than 60 parts by mass, more preferably not more than 30 parts by mass, further preferably not more than 15 parts by mass based on 100 parts by mass of the rubber component. When the content of carbon black is within the above-mentioned range, performance balance between fuel efficiency and abrasion resistance is improved significantly.

Silane coupling agent

In the present disclosure, it is preferable to use a silane coupling agent in combination with silica. Examples thereof include sulfide silane coupling agents such as bis(3-triethoxysilylpropyl)disulfide and bis(3-triethoxysilylpropyl)tetrasulfide; mercapto silane coupling agents such as 3-mercaptopropyltrimethoxysilane and 3-mercaptopropyltriethoxysilane; thioether silane coupling agents such as 3-octanoylthio-1-propyltriethoxysilane, 3-hexanoylthio-1-propyltriethoxysilane and 3-octanoylthio-1-propyltrimethoxysilane; vinyl silane coupling agent such as vinyltriethoxysilane; amino silane coupling agent such as 3-aminopropyltriethoxysilane; glycidoxy silane coupling agent such as $\gamma$-glycidoxypropyltriethoxysilane; nitro silane coupling agent such as 3-nitropropyltrimethoxysilane; and chloro silane coupling agent such as 3-chloropropyltrimethoxysilane. These silane coupling agents may be used alone, or at least 2 kinds thereof may be used in combination. Among these, from the view point of an effect of improving reinforcing property, sulfide silane coupling agents and thioether silane coupling agents are preferable, and combination use of bis(3-triethoxysilylpropyl)tetrasulfide and 3-octanoylthio-1-propyltriethoxysilane is preferable.

When the silane coupling agent is compounded, the content thereof is preferably not less than 1 part by mass, more preferably not less than 3 parts by mass based on 100 parts by mass of silica. On the other hand, the content of silane coupling agent based on 100 parts by mass of silica is preferably not more than 15 parts by mass, more preferably not more than 10 parts by mass. When the content of silane coupling agent is within the above-mentioned range, there is a tendency that good processability, rubber strength and abrasion resistance can be secured.

Potassium salt

Examples of potassium salt include inorganic potassium salts and organic potassium salts. Examples of the inorganic potassium salts include potassium tetraborate, potassium carbonate, potassium bicarbonate, potassium sulfate, potassium hydrogenphosphate, potassium dihydrogenphosphate, potassium oxalate. Examples of the organic potassium salts include potassium acetate, potassium gluconate, potassium citrate, potassium fumarate, potassium laurate, potassium palmitate, potassium stearate, potassium oleate, potassium linolate.

For the reason that a reaction efficiency of the silane coupling agent is enhanced more, inorganic potassium salts are preferable as the potassium salt to be used in the present disclosure, and in particular, at least one potassium salt selected from potassium carbonate, potassium bicarbonate and potassium tetraborate is more preferable and potassium tetraborate is particularly preferable.

Potassium salt generally has particles having a particle size of not less than 500 $\mu$m, and further, since a melting point of the potassium salt is as high as not lower than 800°C, the potassium salt is prone to be left as large particles in a rubber composition after vulcanization. In such a case, when a size of a tire produced using the rubber composition is changed or kind of a vehicle on which the tire is loaded is changed, there may be a case where sufficient abrasion resistance cannot be obtained.

In the present disclosure, by decreasing a particle size of the potassium salt and further reducing a compounding amount thereof as much as possible, a rubber composition being capable of producing a tire exhibiting excellent abrasion resistance can be obtained irrespective of a size of a tire and kind of a vehicle.

An average particle size of the potassium salt is preferably not less than 0.5 μm, more preferably not less than 1 μm. When the average particle size is not less than 0.5 μm, there is a tendency that aggregation of the potassium salt is inhibited. On the other hand, the average particle size of the potassium salt is preferably not more than 350 μm, more preferably not more than 300 μm. When the average particle size is not more than 350 μm, there is a tendency that leaving the potassium salt as large particles in the rubber composition after vulcanization, thereby having an adverse effect on abrasion resistance can be inhibited.

When the rubber composition comprises the potassium salt, a content thereof is not less than 0.1 part by mass, preferably not less than 0.2 part by mass based on 100 parts by mass of silica. When the content of the potassium salt is not less than 0.1 part by mass, there is a tendency that a sufficient effect of enhancing a reaction efficiency of the silane coupling agent can be obtained. On the other hand, the content of the potassium salt is not more than 10 parts by mass, preferably not more than 5 parts by mass based on 100 parts by mass of silica. When the content of the potassium salt is not more than 10 parts by mass, there is a tendency that leaving the potassium salt as large particles in the rubber composition after vulcanization, thereby lowering abrasion resistance can be inhibited.

Wax is not limited particularly, and paraffin wax such as Ozoace-0355 available from NIPPON SEIRO CO., LTD., OK5258H available from PARAMELT is preferable.

When the rubber composition comprises the wax, a content thereof is preferably not less than 0.5 part by mass, more preferably not less than 1.0 part by mass, further preferably not less than 1.5 parts by mass based on 100 parts by mass of the rubber component. On the other hand, the content of the wax is preferably not more than 5.0 parts by mass, more preferably not more than 4.0 parts by mass, further preferably not more than 3.0 parts by mass based on 100 parts by mass of the rubber component. When the content of the wax is within the above-mentioned range, good ozone resistance and crack resistance tend to be obtained.

Examples of the processing aid include fatty acid ester such as n-butyl stearate, fatty acid metal salt such as calcium salt of fatty acid, a mixture of fatty acid ester and fatty acid metal salt, fatty acid amides such as stearamide and oleylamide, fatty acid such as stearic acid. Examples of the fatty acid ester include a trade name "EXCEPARL BS" (available from KAO CORPORATION), a trade name "Terukoru" (available from Kawaken Fine Chemicals Co., Ltd.), trade names "Struktol WB222", "Struktol WB212" and "Struktol WB215" (all available from Schill & Seilacher). Further, examples of the mixture of fatty acid ester and fatty acid metal salt include trade names "Struktol WB16", "Struktol WA48" and "Struktol HT204" (available from Schill & Seilacher). Among these, the mixture of fatty acid ester and fatty acid metal salt is preferable.

When the rubber composition comprises a processing aid, the content thereof is preferably not less than 0.1 part by mass, more preferably not less than 0.2 part by mass based on 100 parts by mass of the rubber component. When the content of the processing aid is not less than 0.1 part by mass, there is a tendency that roll processability and tire formability in an unvulcanized state can be made satisfactory. On the other hand, the content of the processing aid is preferably not more than 10 parts by mass, more preferably not more than 8 parts by mass based on 100 parts by mass of the rubber component. When the content of the processing aid is not more than 10 parts by mass, there is a tendency that air impermeability and elongation at break of a vulcanized rubber can be made satisfactory.

Plasticizer

Examples of the plasticizer include resins other than the liquid farnesene resin and softening agents such as oil and a liquid diene polymer.

(Resins other than the liquid farnesene resin)

The rubber composition used in the present invention contains an aromatic petroleum resin as the resin other than the liquid farnesene resin. Examples of the aromatic petroleum resins include a phenolic resin, a coumarone-indene resin, a terpene resin, a styrene resin, an acrylic resin, a rosin resin, a dicyclopentadiene resin (DCPD resin). Examples of the phenolic resin include Koreshin (available from BASF Japan), TACKIROL (available from Taoka Chemical Co., Ltd.). Examples of the coumarone-indene resin include NITTO RESIN COUMARONE (available from NITTO CHEMICAL CO., LTD.), Neo Polymer (available from Nippon Petrochemicals Co., Ltd.). Examples of the styrene resin include SYLVATRAXX 4401 (available from Arizona Chemical Company). Examples of the terpene resin include TR7125 (available from Arizona Chemical Company), TO125 (available from Yasuhara Chemical Co., Ltd.). These resins may be used alone or may be used in combination of two or more thereof. Among these, styrene resins are preferable from the viewpoint of enhancement of grip performance, and particularly an α-methylstyrene resin is preferable from the viewpoint of enhancement of wet grip performance. It should be noted that herein one simply referred to as a resin means a resin

other than the liquid farnesene resin.

In one embodiment of the present disclosure, it is preferable to use an α-methylstyrene resin in addition to the liquid farnesene resin. In the rubber composition comprising a predetermined amount of silica, it is considered that by compounding predetermined amounts of liquid farnesene resin and α-methylstyrene resin, it is possible to make inhibition of variation of a rubber hardness compatible with enhancement of wet grip performance and that by providing a tread composed of such a rubber composition on a tire, flexibility of a tire can be maintained for a long period of time, thereby enabling quietness and good ride comfort to be kept for a longer period of time and exhibiting an effect of maintaining ride comfort performance of the present disclosure more satisfactorily.

The α-methylstyrene resin is a resin comprising α-methylstyrene as a main monomer component constituting a skeleton (trunk chain) of the resin, and α-methylstyrene resins which are produced and sold by Arizona Chemical Company or any other company can be used as such an α-methylstyrene resin. Examples of the α-methylstyrene resin include an α-methylstyrene homopolymer, an α-methylstyrene-styrene copolymer. These α-methylstyrene resins may be used alone or may be used in combination of two or more thereof.

A softening point of the α-methylstyrene resin is preferably not lower than 60°C, more preferably not lower than 70°C, further preferably not lower than 75°C. When the softening point of the α-methylstyrene resin is lower than 60°C, rolling resistance tends to be lowered. On the other hand, the softening point of the α-methylstyrene resin is not higher than 110°C, preferably not higher than 105°C, more preferably not higher than 100°C. When the softening point of the α-methylstyrene resin exceeds 110°C, dispersibility of the resin and abrasion resistance tend to be lowered.

A content of the α-methylstyrene resin is not less than 2 parts by mass, preferably not less than 3 parts by mass, more preferably not less than 4 parts by mass based on 100 parts by mass of the rubber component. When the content of the α-methylstyrene resin is less than 2 parts by mass, there is a tendency that an effect of enhancing wet grip performance cannot be obtained. On the other hand, the content of the α-methylstyrene resin is not more than 20 parts by mass, preferably not more than 15 parts by mass, more preferably not more than 10 parts by mass. When the content of the α-methylstyrene resin exceeds 20 parts by mass, abrasion resistance tends to be lowered.

A softening point of the resin is preferably not lower than 50°C, more preferably not lower than 60°C, further preferably not lower than 70°C. When the softening point of the resin is not lower than 50°C, there is a tendency that softening of the resin is inhibited and hand grip performance is enhanced. On the other hand, the softening point of the resin is preferably not higher than 200°C, more preferably not higher than 190°C, further preferably not higher than 180°C. When the softening point is not higher than 200°C, there is a tendency that compatibility with a rubber during the kneading is enhanced. In the present disclosure, the softening point of the resin is one specified in JIS K6220-1: 2001 and is a temperature at the time when the ball has dropped on a bottom plate in the measurement with the ring and ball softening point measuring device.

When the rubber composition comprises the resin, a content thereof is preferably not less than 2 parts by mass, more preferably not less than 3 parts by mass, further preferably not less than 4 parts by mass based on 100 parts by mass of the rubber component. When the content of the resin is not less than 2 parts by mass, grip performance tends to be enhanced. On the other hand, the content of the resin is preferably not more than 50 parts by mass, more preferably not more than 30 parts by mass, further preferably not more than 20 parts by mass based on 100 parts by mass of the rubber component. When the content of the resin is not more than 50 parts by mass, there is a tendency that lowering of kneading processability is inhibited.

(Oil)

Oil is not limited particularly, and for example, process oil, vegetable fats and oils or a mixture thereof can be used. Examples of usable process oil include paraffin process oil, aromatic process oil, naphthenic process oil. Among these, aromatic process oil is preferable from the viewpoint of abrasion resistance. These oils may be used alone or may be used in combination of two or more thereof.

When the rubber composition comprises the oil, a content thereof is preferably not less than 1 part by mass, more preferably not less than 2 parts by mass, further preferably not less than 5 parts by mass based on 100 parts by mass of the rubber component. On the other hand, the content of the oil is preferably not more than 100 parts by mass, more preferably not more than 80 parts by mass, further preferably not more than 50 parts by mass based on 100 parts by mass of the rubber component. When the content of the oil is within the above-mentioned range, a sufficient effect of allowing the oil to be contained can be obtained, and satisfactory abrasion resistance can be obtained. It should be noted that herein the oil content includes an amount of oil contained in an oil-extended rubber.

A total content of the liquid farnesene resin and the plasticizer (resin, oil) is not less than 2 parts by mass, preferably not less than 3 parts by mass, more preferably not less than 4 parts by mass based on 100 parts by mass of the rubber component. Further, the total content of the liquid farnesene resin and the plasticizer is not more than 100 parts by mass, preferably not more than 80 parts by mass, more preferably not more than 50 parts by mass. When the total content of the liquid farnesene resin and the plasticizer is within the above-mentioned range, an effect of the present

disclosure can be obtained more suitably.

Antioxidant

The antioxidant is not limited particularly, and for example, antioxidants such as amine, quinoline, phenol and imidazole compounds and carbamic acid metal salt can be optionally selected and blended to the rubber composition. These antioxidants may be used alone or may be used in combination of two or more thereof. Among these, from the viewpoint of heat aging resistance, amine antioxidants and quinoline antioxidants are preferable, and more preferable are p-phenylenediamine antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylheptyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine and phenyloctyl-p-phenylenediamine, and quinoline antioxidants such as polymerized 2,2,4-trimethyl-1,2-dihydroquinoline and 6-ethoxy-2,2,4-trimethyl-1,2-dihydroquinoline. Among these, a combination use of N-(1,3-dimethylbutyl)-N'-phenyl-p-phenylenediamine and 2,2,4-trimethyl-1,2-dihydroquinoline polymer is preferable from the viewpoint of heat aging resistance, ozone resistance and crack resistance.

When the rubber composition comprises the antioxidant, a content thereof (in the case of comprising two or more antioxidants, a total content thereof) is preferably not less than 1 part by mass, more preferably not less than 1.5 parts by mass, more preferably not less than 2 parts by mass based on 100 parts by mass of the rubber component. On the other hand, the content of the antioxidant is preferably not more than 10 parts by mass, more preferably not more than 8 parts by mass, further preferably not more than 6 parts by mass based on 100 parts by mass of the rubber component. When the content of the antioxidant is within the above-mentioned range, heat aging resistance, ozone resistance and crack resistance tend to be enhanced.

Pluronic nonionic surfactant

The Pluronic nonionic surfactant is called polyoxyethylene polyoxypropylene glycol, polyoxyethylene polyoxypropylene block polymer or polypropylene glycol ethylene oxide adduct, and is generally a nonionic surfactant represented by the following formula (5). As represented by the following formula (5), the Pluronic nonionic surfactant has hydrophilic groups having an ethylene oxide structure at both sides thereof, and has hydrophobic groups having a propylene oxide structure and being interposed between the two hydrophilic groups.

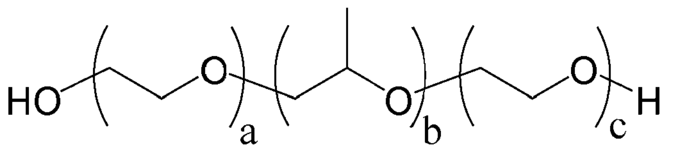

(5)

(in the formula, a, b and c represent integers)

A degree of polymerization of polypropylene oxide block (b of the above formula (5)) and an added amount of polyethylene oxide (a+c of the above formula (5)) of the Pluronic nonionic surfactant are not limited particularly, and can be selected optionally depending on use conditions and purpose. As a rate of the polypropylene oxide block increases, there is a tendency that affinity for the rubber becomes high and a speed of migration to the rubber surface becomes slow. In particular, for the reason that blooming of the nonionic surfactant can be controlled suitably and an effect of the present disclosure can be obtained suitably, the degree of polymerization of polypropylene oxide block (b of the above formula (5)) is preferably not more than 100, more preferably 10 to 70, further preferably 10 to 60, particularly preferably 20 to 60, most preferably 20 to 45. Similarly the added amount of polyethylene oxide (a+c of the above formula (5)) is preferably not more than 100, more preferably 3 to 65, further preferably 5 to 55, particularly preferably 5 to 40, most preferably 10 to 40. When the degree of polymerization of polypropylene oxide block and the added amount of polyethylene oxide are within the above-mentioned ranges, blooming of the nonionic surfactant can be controlled suitably and an effect of the present disclosure can be obtained suitably.

Examples of the Pluronic nonionic surfactant include PLURONIC series available from BASF Japan, Newpol PE series available from Sanyo Chemical Industries, Ltd., ADEKA PLURONIC L or F series available from ADEKA CORPORATION, EPAN series available from DAI-ICHI KOGYO SEIYAKU CO., LTD., PLONON series or UNILUBE available from NOF CORPORATION. These may be used alone or may be used in combination of two or more thereof.

A content of the Pluronic nonionic surfactant is preferably not less than 0.5 part by mass, more preferably not less than 1 part by mass, further preferably not less than 2 parts by mass based on 100 parts by mass of the rubber

component. When the content of the Pluronic nonionic surfactant is not less than 0.5 part by mass, an effect of the present disclosure tends to be obtained suitably. On the other hand, the content of the Pluronic nonionic surfactant is preferably not more than 6 parts by mass, more preferably not more than 5 parts by mass, further preferably not more than 4 parts by mass based on 100 parts by mass of the rubber component. When the content of the Pluronic nonionic surfactant is not more than 6 parts by mass, a steering stability, crack resistance, ozone resistance, resistance to discoloration, fuel efficiency, abrasion resistance and on-ice performance tend to be satisfactory.

In addition, stearic acid, zinc oxide which have been used in a rubber industry can be used.

Vulcanizing agent

The vulcanizing agent is not limited particularly, and those which have been used in a rubber industry can be selected appropriately and used. Examples thereof include sulfur such as powdered sulfur, precipitated sulfur, colloidal sulfur, surface-treated sulfur, insoluble sulfur, oil-containing soluble sulfur.

A content of the vulcanizing agent is preferably not less than 0.1 part by mass, more preferably not less than 0.5 part by mass, further preferably not less than 1.0 part by mass based on 100 parts by mass of the rubber component. On the other hand, the content of the vulcanizing agent is not more than 20 parts by mass, preferably not more than 10 parts by mass, more preferably not more than 5 parts by mass. When the content of the vulcanizing agent is within the above-mentioned range, a suitable reinforcing effect tends to be obtained.

Vulcanization accelerator

The vulcanization accelerator is not limited particularly, and examples thereof include sulfenamide-, thiazole-, thiuram-, thiourea-, guanidine-, dithiocarbamate-, aldehyde amine- or aldehyde ammonia-, imidazoline- and xanthate-based vulcanization accelerators. Among these, sulfenamide- and guanidine-based vulcanization accelerators are preferred from a point that the effect of the present disclosure can be obtained more suitably.

Examples of sulfenamide-based vulcanization accelerators include CBS (N-cyclohexyl-2-benzothiazolylsulfenamide), TBBS (N-t-butyl-2-benzothiazolylsulfenamide), N-oxyethylene-2-benzothiazolylsulfenamide, N,N'-diisopropyl-2-benzothiazolylsulfenamide, N,N-dicyclohexyl-2-benzothiazolylsulfenamide. Examples of thiazole-based vulcanization accelerators include 2-mercaptobenzothiazole, dibenzothiazolyldisulfide. Examples of thiuram-based vulcanization accelerators include tetramethylthiuram monosulfide, tetramethylthiuram disulfide, tetrabenzylthiuram disulfide (TBzTD). Examples of guanidine-based vulcanization accelerators include diphenylguanidine (DPG), di-o-tolylguanidine, o-tolylbiguanidine. These may be used alone or may be used in combination of two or more thereof. Among these, combination use of CBS and DPG is preferred from a point that the effect of the present disclosure can be obtained suitably.

When the rubber composition comprises the vulcanization accelerator, a content thereof is preferably not less than 0.1 part by mass, more preferably not less than 0.5 part by mass, further preferably not less than 1.0 part by mass based on 100 parts by mass of the rubber component. On the other hand, the content of the vulcanization accelerator is preferably not more than 20 parts by mass, more preferably not more than 10 parts by mass, further preferably not more than 5 parts by mass based on 100 parts by mass of the rubber component. When the content of the vulcanization accelerator is within the above-mentioned range, a suitable reinforcing effect and vulcanization accelerating effect tend to be obtained.

The rubber composition used in the present disclosure can be used on tire members such as a tread and an under tread of a tire. Further, in the case of a two-layer tread comprising a cap tread and a base tread, the rubber composition can be used suitably on a cap tread.

Method of preparing a rubber composition

The rubber composition used in the present disclosure can be prepared by a usual method. For example, the rubber composition can be prepared by a method of kneading each of the above-mentioned components except the vulcanizing agent and the vulcanization accelerator using a well-known kneading apparatus which is generally used in rubber industries such as a Banbury mixer, a kneader or an open roll (a base kneading step), and then adding the vulcanizing agent and the vulcanization accelerator, followed by further kneading a mixture (a finish kneading step) and conducting vulcanization, method.

Tire

The tire of the present disclosure can be produced by a usual method using the above-mentioned rubber composition. Namely the rubber composition prepared by compounding silica and a liquid farnesene resin, if necessary the above-mentioned compounding agents with rubber component is extrusion-processed into a shape of a tread, and

further, the obtained extruded product is laminated with other tire members to form an unvulcanized tire on a tire molding machine by a usual forming method. The tire can be produced by heating and pressurizing this unvulcanized tire in a vulcanizer. A tread can also be produced by a method of laminating sheets of an unvulcanized rubber composition into a predetermined shape or a method of inserting an unvulcanized rubber composition in two or more extruders to form two phases at outlets of heads of the extruders.

EXAMPLE

The present disclosure is explained by means of Examples, but is not limited to the Examples.

Various chemicals used in Examples and Comparative examples are collectively shown below.

NR: TSR20

SBR1: Modified amine SBR having a number-average molecular weight (Mn) of $2.1\times10^5$, a weight-average molecular weight (Mw) of $3.1\times10^5$, Tg of -25°C and a styrene content of 25% by mass

SBR2: Modified amine SBR having a styrene content of 36% by mass, an oil content of 25 parts by mass based on 100 parts by mass of a rubber solid content, a number-average molecular weight (Mn) of $1.0\times10^5$, a weight-average molecular weight (Mw) of $6.2\times10^5$ and Tg of -22°C

BR: Modified BR modified with a mixture of a low molecular weight compound having a glycidyl amino group in its molecule and an oligomer of a dimer or more of this low molecular weight compound and having a cis content : trans content : vinyl content = 40 : 50 : 10, and a weight-average molecular weight (Mw) of 600,000

Carbon black: DIABLACK (registered trademark) I N220 available from Mitsubishi Chemical Corporation ($N_2SA$: 112 $m^2/g$, DBP oil absorption: 115 ml/100 g)

Silica: ULTRASIL (registered trademark) VN3 available from Evonik Industry ($N_2SA$: 175 $m^2/g$)

Silane coupling agent: Si 75 (registered trademark) manufactured by Evonik Industry (bis(triethoxysilylpropyl)disulfide)

Oil: NH-70S (process oil) manufactured by Idemitsu Kosan Co., Ltd.

Resin 1: SYLVATRAXX 4401 ($\alpha$-methylstyrene resin, softening point: 85°C) manufactured by Arizona Chemical Company

Resin 2: NITTO RESIN COUMARONE available from NITTO CHEMICAL CO., LTD. (coumarone-indene resin, a weight-average molecular weight (Mw): 500, Tg: 70°C, softening point: 120°C)

Processing aid: STRUKTOL WB16 available from Schill & Seilacher (a mixture of fatty acid ester and fatty acid metal salt)

Wax: OZOACE 0355 manufactured by Nippon Seiro Co., Ltd.

Potassium tetraborate: Potassium Tetraborate (50 mesh) available from Yoneyama Chemical Industry Co., Ltd.

BLP1: Liquid farnesene-butadiene copolymer (a weight-average molecular weight (Mw): 100,000, a copolymerization ratio on a mass basis: farnesene/butadiene = 60/40, Tg: -78°C)

BLP2: Liquid farnesene homopolymer (a weight-average molecular weight (Mw): 10,000, Tg: -72°C)

BLP3: Liquid farnesene-styrene copolymer (a weight-average molecular weight (Mw): 10,000, a copolymerization ratio on a mass basis: farnesene/styrene = 77/23, Tg: -72°C)

Antioxidant 1: Nocrac 6C manufactured by OUCHI SHINKO CHEMICAL INDUSTRIAL CO., LTD (N-(1,3-dimethylbutyl)-N'-phenyl-p-phenylenediamine).

Antioxidant 2: Nocrac FR manufactured by OUCHI SHINKO CHEMICAL INDUSTRIAL CO., LTD (Polymerized 2,2,4-trimethyl-1,2-dihydroquinoline).

Zinc oxide: ZINC FLOWER No. 1 available from Mitsui Mining & Smelting Co., Ltd.

Stearic acid: Bead Stearic acid "Tsubaki" available from NOF CORPORATION

Surfactant: Newpol PE-64 available from Sanyo Chemical Industries, Ltd. (Pluronic nonionic surfactant (PEG/PPG-25/30 copolymer) (a+c of the above-mentioned formula (5): 25, b: 30))

Sulfur: Powdered sulfur (powdered sulfur containing 5% oil) available from Tsurumi Chemical Industry Co., Ltd.

Vulcanization accelerator DPG: SOXINOL D-G manufactured by Sumitomo Chemical Company, Limited (N,N'-diphenylguanidine) Vulcanization accelerator CZ manufactured by Sumitomo Chemical Company, Limited: SOXINOL CZ (N-cyclohexyl-2-benzothiazolylsulfenamide)

Examples 1 to 12 and Comparative Examples 1 to 4

According to compounding formulations shown in Table 1, chemicals other than a vulcanizing agent and a vulcanization accelerator were poured into a 1.7L Banbury mixer, followed by kneading for 5 minutes at a discharge temperature of 150°C to obtain a kneaded product. Sulfur and the vulcanization accelerator were added to the obtained kneaded product according to the compounding formulations shown in Table 1, followed by kneading for 5 minutes

under a condition of 80°C using an open roll to obtain an unvulcanized rubber composition. The obtained unvulcanized rubber composition was subjected to press-vulcanization for 20 minutes under a condition of 170°C to obtain a vulcanized rubber composition.

Further the obtained unvulcanized rubber composition was formed into a shape of a tread which was then laminated with other tire members to form an unvulcanized tire, followed by vulcanization for 12 minutes at 170°C to produce a tire (tire size: 215/60R16).

The following evaluations were made using the vulcanized rubber composition and tires obtained in Examples and Comparative Examples. The results of the evaluations are shown in Table 1.

<Index of variation of hardness>

A hardness (JIS A) of a tread portion of a test tire before and after allowing it to stand at 40°C under an ozone condition of 50 pphm was measured. When the index of variation of hardness obtained by the following equation is within a range of 95 to 100, variation of hardness is at good level.

$$\text{(Index of variation of hardness)} = \text{(Hardness before allowing to stand)} / \text{(Hardness after allowing to stand)} \times 100$$

<Evaluation of maintenance of ride comfort performance>

The test tires were mounted on standard rims (size = 16×6.5J) and was filled with air up to an inner pressure of 210 kPa. These tires were loaded on a vehicle with displacement of 2000 cc. The vehicle was allowed to run on an asphalt road of a test course for 80 km, and a sensorial evaluation of ride comfort by a test driver was carried out. A similar test was carried out using tires having been allowed to stand at 40°C under ozone condition of 50 pphm for one week. The results were evaluated by the following equation. When maintenance index is within a range of 90 to 100, ride comfort performance is at a good level.

$$\text{(Maintenance index of ride comfort performance)} = \text{Index of ride comfort of tire after allowing to stand} / \text{Index of ride comfort of tire before allowing to stand} \times 100$$

Table 1

| | Examples | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Compounding amount (part by mass) | | | | | | | | | | | | |
| NR | 20 | 26 | 26 | 26 | 26 | 26 | 26 | 26 | 20 | 20 | 26 | 26 |
| SBR1 | 37 | 37 | 37 | 37 | 37 | 37 | 37 | 37 | 30 | 37 | 37 | 37 |
| SBR2 | 28.75 | 28.75 | 28.75 | 28.75 | 28.75 | 28.75 | 28.75 | 28.75 | 37.5 | 28.75 | 28.75 | 28.75 |
| BR | 20 | 14 | 14 | 14 | 14 | 14 | 14 | 14 | 20 | 20 | 14 | 14 |
| Carbon black | 6 | 6 | 6 | 6 | 6 | 6 | 6 | 6 | 6 | 6 | 6 | 6 |
| Silica | 50 | 50 | 50 | 50 | 50 | 50 | 60 | 70 | 50 | 50 | 50 | 50 |
| Silane coupling agent | 5 | 5 | 5 | 5 | 5 | 5 | 6 | 7 | 5 | 5 | 5 | 5 |
| Wax | 2 | 2 | 2 | 2 | 2 | 2 | 2 | 2 | 2 | 2 | 2 | 2 |
| Oil | - | - | - | - | - | - | - | - | - | - | - | - |
| BLP1 | 5 | 5 | 2 | 20 | - | - | 5 | 10 | 5 | 5 | - | - |
| BLP2 | - | - | - | - | 5 | - | - | - | - | - | 5 | - |
| BLP3 | - | - | - | - | - | 5 | - | - | - | - | - | 5 |
| Resin 1 | 8 | 8 | 8 | 8 | 8 | 8 | 8 | 8 | 8 | - | - | - |
| Resin 2 | - | - | - | - | - | - | - | - | - | 8 | 8 | 8 |
| Processing aid | 1 | 1 | 1 | 1 | 1 | 1 | 1 | 1 | 1 | 1 | 1 | 1 |
| Potassium tetraborate | 1 | 1 | 1 | 1 | 1 | 1 | 1 | 1 | 1 | 1 | 1 | 1 |
| Antioxidant 1 | 2 | 2 | 2 | 2 | 2 | 2 | 2 | 2 | 2 | 2 | 2 | 2 |
| Antioxidant 2 | 1 | 1 | 1 | 1 | 1 | 1 | 1 | 1 | 1 | 1 | 1 | 1 |
| Stearic acid | 3 | 3 | 3 | 3 | 3 | 3 | 3 | 3 | 3 | 3 | 3 | 3 |
| Zinc oxide | 2 | 2 | 2 | 2 | 2 | 2 | 2 | 2 | 2 | 2 | 2 | 2 |
| Surfactant | 3 | 3 | 3 | 3 | 3 | 3 | 3 | 3 | 3 | 3 | 3 | 3 |
| Sulfur | 2 | 2 | 2 | 2 | 2 | 2 | 2 | 2 | 2 | 2 | 2 | 2 |
| Vulcanization accelerator DPG | 3 | 3 | 3 | 3 | 3 | 3 | 3 | 3 | 3 | 3 | 3 | 3 |
| Vulcanization accelerator CZ | 2 | 2 | 2 | 2 | 2 | 2 | 2 | 2 | 2 | 2 | 2 | 2 |
| Evaluation | | | | | | | | | | | | |
| Index of variation of hardness | 98 | 98 | 95 | 97 | 99 | 99 | 98 | 97 | 96 | 96 | 97 | 97 |
| Maintenance index of ride comfort performance | 96 | 95 | 90 | 93 | 98 | 97 | 96 | 94 | 91 | 94 | 96 | 95 |

- continued -

- continued -

| Compounding amount (part by mass) | Comparative Examples 1 | Comparative Examples 2 | Comparative Examples 3 | Comparative Examples 4 |
|---|---|---|---|---|
| NR | 20 | 20 | 20 | 20 |
| SBR1 | 37 | 37 | 37 | 37 |
| SBR2 | 28.75 | 28.75 | 28.75 | 28.75 |
| BR | 20 | 20 | 20 | 20 |
| Carbon black | 6 | 6 | 50 | 6 |
| Silica | 50 | 50 | 5 | 160 |
| Silane coupling agent | 5 | 5 | 5 | 5 |
| Wax | 2 | 2 | 2 | 2 |
| Oil | 5 | - | - | - |
| BLP1 | - | 1 | 5 | 5 |
| BLP2 | - | - | - | - |
| BLP3 | - | - | - | - |
| Resin 1 | - | - | - | - |
| Resin 2 | - | - | - | - |
| Processing aid | 1 | 1 | 1 | 1 |
| Potassium tetraborate | 1 | 1 | 1 | 1 |
| Antioxidant 1 | 2 | 2 | 2 | 2 |
| Antioxidant 2 | 1 | 1 | 1 | 1 |
| Stearic acid | 3 | 3 | 3 | 3 |
| Zinc oxide | 2 | 2 | 2 | 2 |
| Surfactant | 3 | 3 | 3 | 3 |
| Sulfur | 2 | 2 | 2 | 2 |
| Vulcanization accelerator DPG | 3 | 3 | 3 | 3 |
| Vulcanization accelerator CZ | 2 | 2 | 2 | 2 |
| Evaluation | | | | |
| Index of variation of hardness | 91 | 92 | 93 | 88 |
| Maintenance index of ride comfort performance | 80 | 85 | 86 | 75 |

From the results shown in Table 1, it is seen that in Examples 1 to 12, where a tread is composed of a rubber composition comprising a predetermined amount of a liquid farnesene resin and a predetermined amount of silica and having a predetermined total amount of the liquid farnesene resin and a plasticizer, variation of a hardness is small (in other words, an index of variation of hardness is large) and ride comfort performance is maintained as compared with Comparative Examples 1 and 2 where a rubber composition does not comprise a predetermined amount of a liquid farnesene resin and Comparative Examples 3 and 4 where a silica content is not within a predetermined range according to the present disclosure.

## Claims

1. A tire having a tread composed of a rubber composition comprising 2 to 20 parts by mass of a liquid farnesene resin and 10 to 150 parts by mass of silica based on 100 parts by mass of a rubber component, wherein a total content of the liquid farnesene resin and a plasticizer is 2 to 100 parts by mass, wherein the rubber component comprises 5 to 50% by mass of natural rubber and 10 to 95% by mass of styrene-butadiene rubber and wherein the rubber

composition comprises an aromatic petroleum resin as the plasticizer.

2. The tire of claim 1, wherein the content of the liquid farnesene resin is 3 to 15 parts by mass.

3. The tire of claim 1 or 2, wherein the liquid farnesene resin is at least one selected from the group consisting of a liquid farnesene-butadiene copolymer, a liquid farnesene homopolymer and a liquid farnesene-styrene copolymer.

4. The tire of any one of claims 1 to 3, wherein an amount of styrene in the styrene-butadiene rubber is 5 to 60% by mass.

5. The tire of any one of claims 1 to 4, wherein the content of silica is 30 to 100 parts by mass.

6. The tire of any one of claims 1 to 5, wherein the aromatic petroleum resin is an $\alpha$-methyl styrene resin.

## Patentansprüche

1. Reifen mit einer Lauffläche, die aus einer Kautschukzusammensetzung zusammengesetzt ist, die 2 bis 20 Masseteile eines flüssigen Farnesenharzes und 10 bis 150 Masseteile Siliciumdioxid, bezogen auf 100 Masseteile einer Kautschukkomponente, umfasst, wobei der Gesamtgehalt des flüssigen Farnesenharzes und eines Weichmachers 2 bis 100 Masseteile beträgt, wobei die Kautschukkomponente 5 bis 50 Massen-% Naturkautschuk und 10 bis 95 Massen-% Styrol-Butadien-Kautschuk umfasst und wobei die Kautschukzusammensetzung ein aromatisches Petroleumharz als den Weichmacher umfasst.

2. Reifen nach Anspruch 1, wobei der Gehalt des flüssigen Farnesenharzes 3 bis 15 Masseteile beträgt.

3. Reifen nach Anspruch 1 oder 2, wobei das flüssige Farnesenharz zumindest eines ist, das ausgewählt ist aus der Gruppe bestehend aus einem flüssigen Farnesen-Butadien-Copolymer, einem flüssigen Farnesen-Homopolymer und einem flüssigen Farnesen-Styrol-Copolymer.

4. Reifen nach einem der Ansprüche 1 bis 3, wobei eine Menge an Styrol in dem Styrol-Butadien-Kautschuk 5 bis 60 Massen-% beträgt.

5. Reifen nach einem der Ansprüche 1 bis 4, wobei der Gehalt an Siliciumdioxid 30 bis 100 Masseteile beträgt.

6. Reifen nach einem der Ansprüche 1 bis 5, wobei das aromatische Petroleumharz ein $\alpha$-Methylstyrolharz ist.

## Revendications

1. Pneumatique ayant une bande de roulement composée d'une composition de caoutchouc comprenant 2 à 20 parties en masse d'une résine de farnésène liquide et 10 à 150 parties en masse de silice sur la base de 100 parties en masse d'un composant caoutchouc, dans lequel une teneur totale de la résine de farnésène liquide et d'un plastifiant est de 2 à 100 parties en masse, dans lequel le composant caoutchouc comprend 5 à 50 % en masse de caoutchouc naturel et 10 à 95 % en masse de caoutchouc styrène-butadiène et dans lequel la composition de caoutchouc comprend une résine de pétrole aromatique en tant que plastifiant.

2. Pneumatique selon la revendication 1, dans lequel la teneur de la résine de farnésène liquide est de 3 à 15 parties en masse.

3. Pneumatique selon la revendication 1 ou 2, dans lequel la résine de farnésène liquide en est au moins une choisie dans le groupe constitué par un copolymère de farnésène-butadiène liquide, un homopolymère de farnésène liquide et un copolymère de farnésène-styrène liquide.

4. Pneumatique selon l'une quelconque des revendications 1 à 3, dans lequel une quantité de styrène dans le caoutchouc styrène-butadiène est de 5 à 60 % en masse.

5. Pneumatique selon l'une quelconque des revendications 1 à 4, dans lequel la teneur de la silice est de 30 à 100 parties en masse.

**6.** Pneumatique selon l'une quelconque des revendications 1 à 5, dans lequel la résine de pétrole aromatique est une résine d'$\alpha$-méthylstyrène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014506277 A
- JP 2016 A
- JP 003269 A
- EP 2783880 A1
- JP 2016035053 A
- JP 2009275178 A